Europäisches Patentamt

(19) European Patent Office

Office européen des brevets

(11) Numéro de publication: **0 086 118**
**B1**

(12) **FASCICULE DE BREVET EUROPEEN**

(45) Date de publication du fascicule du brevet:
09.04.86

(51) Int. Cl.⁴: **C 01 B 25/238**, C 01 B 25/46

(21) Numéro de dépôt: 83400048.1

(22) Date de dépôt: 10.01.83

(54) Procédé de purification d'acide phosphorique de voie humide.

(30) Priorité: 25.01.82 FR 8201058

(43) Date de publication de la demande:
17.08.83 Bulletin 83/33

(45) Mention de la délivrance du brevet:
09.04.86 Bulletin 86/15

(84) Etats contractants désignés:
BE DE FR GB IT NL

(56) Documents cités:
EP - A - 0 023 195
FR - A - 1 531 487
FR - A - 2 234 228

CHEMICAL ABSTRACTS, col. 84, no. 18, 3 mai 1976,
page 130, référence 124043v, Columbus, Ohio, US
CHEMICAL ABSTRACTS, vol. 96, no. 6, 8 Février 1982,
page 156, référence 37774p, Columbus, Ohio, US

(73) Titulaire: RHONE-POULENC CHIMIE DE BASE, 25, quai
Paul Doumer, F-92408 Courbevoie (FR)

(72) Inventeur: Winand, Louis, Le Village Caumont,
F-27310 Bourg Achard (FR)
Inventeur: Perron, Dominique, Immeuble La Vacherie,
F-76530 Moulineaux (FR)

(74) Mandataire: Dubruc, Philippe et al, RHONE-POULENC
RECHERCHES Service Brevets Chimie et
Polymères 25, quai Paul-Doumer, F-92408 Courbevoie
Cedex (FR)

LIBER, STOCKHOLM 1986

## Description

La présente invention concerne un procédé de purification en métaux lourds d'un acide phosphorique obtenu par voie humide, en vue notamment de diminuer sa teneur en molybdène.

Plus particulièrement, le procédé de l'invention s'applique à la fabrication d'acide phosphorique de qualité alimentaire.

On sait que l'acide phosphorique s'utilise dans les produits alimentaires et la demande en acide dans ce domaine est en augmentation. Par ailleurs, l'acide phosphorique utilisé dans l'industrie alimentaire était jusqu'à une date récente l'acide obtenu par voie thermique qui, on le sait, présente des taux en impuretés très faibles, notamment en ce qui concerne les impuretés gênantes pour les applications alimentaires.

Cependant, le procédé par voie thermique est coûteux. Le besoin s'est donc fait sentir d'utiliser aussi dans des applications alimentaires l'acide phosphorique obtenu par le procédé de voie humide et de prix de revient bien plus faible.

Malheureusement, l'acide phosphorique de voie humide contient de nombreuses impuretés et notamment des éléments comme le plomb, le mercure, l'arsenic qui rendent impossible son emploi dans l'industrie alimentaire sans purification préalable.

En effet, les acide de qualité alimentaire doivent respecter des normes bien précises. En particulier, les acides alimentaires de titre commercial, c'est-à-dire en principe 75% à 85% de $H_3PO_4$ soit environ 54% à 62% en $P_2O_5$, subissent un test appelé test des métaux lourds.

Ce test a pour but de déterminer la teneur en métaux lourds des acides. Parmi ces métaux lourds les plus connus, on peut citer notamment l'argent, le mercure, le plomb, le cuivre, le cadmium et le bismuth.

Le test consiste à déterminer la coloration que prend un échantillon d'acide phosphorique sous l'action de $H_2S$ à un pH déterminé (entre 3 et 4). Cette coloration est comparée à celles de solutions témoins contenant des quantités connues d'ions $Pb^{2+}$ et elle est traduite en métaux lourds exprimés en plomb. Pour être significatif, ce test doit être appliqué sur des acides qui ont été soumis en fabrication à un traitement par $H_2S$ ou par un sulfure en milieu très acide (acide tel quel), de façon à précipiter le sulfure de As qui est ensuite filtré. Sans quoi le sulfure d'arsenic donnerait une coloration jaune qui fausserait le test. Le traitement de désarséniation se fait au titre commercial.

Pour les acides de qualité alimentaire et de titre commercial précisé ci-dessus, cette quantité doit être inférieure à 10 ppm.

On connaît déjà certains procédés de purification d'un acide phosphorique de voie humide pour utilisation ultérieure de l'acide dans l'alimentation ou dans les produits pharmaceutiques notamment.

Ainsi le brevet français No. 2.234.228 fait état d'un procédé dans lequel l'acide est traité avec du sulfure d'hydrogène en présence de charbon actif. Le traitement se fait par simple addition du sulfure à la solution d'acide phosphorique (voir l'exemple 1).

L'article des Chemical Abstracts Vol. 84, No. 18, 1976, page 130, référence 124043 v décrit un procédé d'élimination de cadmium de cuivre et d'arsenic d'un acide phosphorique. L'acide est traité par addition d'un sulfure mais sous pression dans un autoclave.

L'article des Chemical Abstracts Vol. 96, No. 6, 1982, page 156, référence 3774p concerne aussi un procédé dans lequel par simple addition d'un sulfure à l'acide phosphorique on élimine l'arsenic.

Or, pour la plupart des acides de voie humide même après les traitements de purification connus, notamment par extraction par solvant organique et mise en contact avec l'hydrogène sulfuré au titre commercial, il est impossible d'obtenir un test des métaux lourds satisfaisant à la norme indiquée ci-dessus.

La Demanderesse a trouvé que le fait que ce test donnait une valeur supérieure à environ 10 ppm est essentiellement dû au molybdène qui se trouve présent en quantité non négligeable dans la plupart des acides phosphoriques de voie humide, même, en particulier, dans ceux purifiés par traitement par solvant organique. En fait, l'action de $H_2S$ sur les sels de molybdène donne lieu à une coloration jaune, ce qui conduit à un test ne satisfaisant pas à la norme.

L'objet de l'invention est donc un procédé de purification de l'acide phosphorique en vue de réduire sa teneur en métaux lourds et plus particulièrement en molybdène, cette teneur en ce dernier élément pouvant être abaissée à une valeur inférieure à 10 ppm par rapport à $P_2O_5$.

Dans ce but le procédé de purification de l'acide phosphorique de l'invention est du type consistant à traiter l'acide par un sulfure et il est caractérisé en ce qu'on traite ledit acide à une concentration ne dépassant pas 40% en $P_2O_5$ et d'autant plus faible que la teneur en molybdène de l'acide avant traitement est élevée et en ce que le traitement est réalisé par mise en contact à contre-courant de l'acide et d'une solution de sulfure.

Selon un mode de réalisation particulier de l'invention, on effectue ce traitement sur un acide ayant subi un prétraitement par extraction par un solvant organique et réextraction.

D'autres caractéristiques et avantages de l'invention seront mieux compris à la lecture de la description qui va suivre et des exemples concrets mais non limitatifs de mise en oeuvre du procédé de l'invention.

L'acide de départ est bien entendu un acide de voie humide obtenu par attaque d'un minerai phosphaté avec un acide fort comme l'acide sulfurique nitrique ou chlorhydrique Le minerai peut bien sûr avoir subi tout prétraitement connu tel que par exemple, une calcination, un broyage, une flottation. Par ailleurs, ou utilise un acide dilué, c'est-à-dire un acide présentant une concentration inférieure ou nettement inférieure à la concentration commerciale indiquée plus haut, qui est de l'ordre de 54% à 62% environ en $P_2O_5$.

La concentration maximale à laquelle le procédé de l'invention peut être valablement mis en oeuvre dépend du minerai de départ utilisé pour la fabrication de l'acide phosphorique et plus particulièrement, de la teneur en molybdène de ce minerai et de l'acide qui en résulte. Plus la teneur en molybdène de l'acide avant traitement est faible, plus cette concentration maximale est élevée et inversement. Cette concentration maximale, exprimée en $P_2O_5$, ne doit pas dépasser 40% en $P_2O_5$.

La concentration minimale n'est pas critique. Elle est essentiellement déterminée par des considérations économiques. On comprend en effet que plus cette concentration est faible, plus le bilan d'eau pour l'ensemble du procédé de préparation de l'acide phosphorique est désavantageux, plus est importante la consommation d'énergie nécessaire par la suite pour ramener l'acide à un titre commercial.

En conséquence, cette concentration minimale peut être fixée à environ 10% en $P_2O_5$. Comme on va le voir, en pratique, le traitement de l'invention s'effectue sur un acide ayant subi une purification par extraction avec un solvant organique. Dans ce cas, l'acide se présente généralement à une concentration en $P_2O_5$ d'environ 20 à 30%.

Avant le traitement par un sulfure, l'acide phosphorique peut subir un prétraitement de purification. Ce prétraitement peut se faire selon toute méthode convenable, il peut s'agir notamment d'une purification par solvant ou, comme indiqué précédemment, d'une extraction liquid-liquide avec un solvant organique.

Comme solvant convenable on peut citer par exemple les alcools, notamment les alcools aliphatiques et en particulier ceux contenant de 3 à 8 atomes de carbone, comme les propanols, les butanols, les pentanols; les esters phosphoriques tels que le tributylphosphate (TBP), les amines, les cétones telle que la méthylbutylcétone, les éthers comme l'éther isopropylique, utilisés seul ou en mélange.

L'acide phosphorique contenu dans la phase organique est réextrait sous forme d'une solution aqueuse par exemple par réextraction à l'eau ou par distillation.

Dans le cas de l'extraction liquide-liquide, celle-ci s'effectue de manière connue en soi. L'acide phosphorique brut provenant de l'attaque d'un minerai phosphaté par l'acide sulfurique par exemple, est mis en contact, à contre-courant, dans un extracteur avec un solvant organique présentant une affinité suffisante pour l'acide phosphorique et peu ou pas miscible à l'eau.

On notera que dans le prétraitement par extraction par solvant organique qui vient d'être mentionnée, le choix du solvant ne semble pas critique. On peut en effet penser que le molybdène est complexé par l'acide phosphorique de sorte que le solvant extrait le molybdène avec l'acide phosphorique, ceci étant vérifié par le fait que la teneur en molybdène de l'acide ainsi prétraité est très voisine de celle de l'acide brut.

Le traitement proprement dit selon l'invention se fait par mise en contact de l'acide avec un sulfure.

Comme sulfure convenable dans le cadre de l'invention on peut citer par exemple les sulfures ou les hydrogéno-sulfures de métal alcalin, de métal alcalino-terreux ou d'ammoniac comme le sulfure de sodium, le sulfure de potassium, le sulfure d'ammonium, le sulfure de baryum, le sulfure de calcium, l'hydrogénosulfure de sodium, l'hydrogénosulfure d'ammonium et les composés analogues.

Le choix du sulfure se fait en tenant compte de ce que l'on doit éviter de repolluer l'acide par l'addition d'un cation gênant.

La température à laquelle s'effectue le traitement n'est pas critique. Elle est déterminée par des conditions pratiques. On se place habituellement à la température ambiante soit environ 18 à 30°C. On a pu dans certains cas montrer une légère amélioration dans l'élimination du molybdène à 50°C environ par rapport au traitement à la température ambiante.

Selon l'invention le traitement de l'acide par le sulfure se fait par mise en contact à contre-courant de l'acide et de la solution de sulfure qui libère de l'hydrogène sulfuré gazeux au contact de l'acide, notamment dans un système en colonne à contre-courant, la colonne étant remplie de billes de verre.

Le sulfure est utilisé avantageusement en excès par rapport à la quantité équivalente de métal lourd et de molybdène présent dans l'acide phosphorique à purifier.

Le traitement est effectué de préférence de manière à obtenir une teneur en molybdène inférieure à 10 ppm par rapport à $P_2O_5$.

Après le traitement, les sulfures précipités sont séparés de l'acide par tout moyen connu.

On constate que, outre la bonne diminution de la teneur en molybdène, l'élimination de l'arsenic reste tout à fait satisfaisante.

A l'issue du traitement, l'acide purifié est alors concentré au titre voulu.

Il sera éventuellement possible de traiter l'acide concentré en vue d'éliminer la coloration jaune due à présence d'un peu de matières organiques. Ce traitement pourra se faire notamment par addition d'un oxydant tel que l'eau oxygénée en chauffant l'acide par exemple à 130°C puis par addition d'un adsorbant comme le charbon actif ou de préférence, un oxydant tel que $HClO_3$ vers 160°C par exemple.

Des exemples concrets vont maintenant être donnés. les exemples 1 à 17 et 19 et 20 sont essentiellement des exemples comparatifs ou mettant en évidence l'influence de certains paramètres pour la purification. L'exemple 18 est un exemple selon l'invention.

Tous les pourcentages et les teneurs sont exprimés en poids par rapport à $P_2O_5$ sauf indication contraire.

Les exemples 1 à 7 ci-dessous ont pour but de montrer l'influence du titre de l'acide pour l'élimination du molybdène.

Exemple 1

On part d'un acid obtenu à partir d'un minerai de Floride et purifié par extraction au tributylphosphate. Il présente alors une teneur en $P_2O_5$ de 25,2%, en molybdène de 12 ppm et en arsenic de 22 ppm.

On ajoute à cet acide, goutte à goutte, une liqueur de $Na_2S$ à la concentration de 150 g/l.

Cet ajout est fait pendant environ une demi-heure dans un erlenmeyer avec agitation. La quantité de liqueur de $Na_2S$ ajoutée correspond à 2 g de $Na_2S$ par litre d'acide.

On filtre ensuite sur un creuset filtrant No. 4.

On note alors les teneurs en arsenic et en molybdène de l'acide traité et filtré.

Les résultats sont reportés dans le tableau 1.

Exemples 2 a 4

On part du même acide que précédemment mais avec des concentrations en $P_2O_5$ variables.

On procède de la même manière que dans l'exemple 1 et on obtient les teneurs en arsenic et en molybdène indiquées dans le tableau 1.

Exemples 5 a 7

On utilise cette fois-ci un acide obtenu à partir d'un minerai de Jordanie et purifié par extraction au tributylphosphate. Cet acide présente une teneur en molybdène de 67 ppm et en arsenic de 8 ppm.

On procède de la même manière que dans l'exemple 1 avec des concentrations variables en $P_2O_5$. Les résultats sont indiqués dans le tableau 1.

Il apparaît donc à la suite des exemples ci-dessus, qu'à partir d'une certaine concentration en $P_2O_5$ il n'est plus possible d'obtenir une élimination du molybdène, inférieure à 10 ppm.

Les exemples suivants illustrent l'influence de la teneur en molybdène d'un acide purifié par le test des métaux lourds.

On a fait varier en outre la quantité de liqueur de $Na_2S$ utilisée.

Exemple 8

On utilise un acide à 12 ppm de $Mo/P_2O_5$ obtenu à partir d'un minerai de Floride et purifié par un procédé d'extraction au tributylphosphate. Il présente alors une concentration de 25,5% en $P_2O_5$. On traite cet acide par un liqueur de $Na_2S$ (2g $Na_2S/l$). On filtre et on concentre à une teneur de 61% en $P_2O_5$.

On décolore l'acide ainsi concentré par traitement vers 130°C par un peu d'eau oxygénée puis par un peu de charbon actif ou, de préférence, par un peu de $HClO_3$ vers 160°C afin d'éliminer la coloration jaune due à peu de matière organique.

Ou soumet ensuite l'acide au test des métaux lourds.

Le résultat est reporté au tableau 2 ci-dessous.

Exemple 9

On procède comme pour l'exemple 8 mais le traitement par $Na_2S$ se fait sur l'acide concentré à 61% en $P_2O_5$ et dans le cas a) par addition de 2 g de $Na_2S$ sous forme de liqueur par litre d'acide et dans le cas b) on multiplie par 5 quantité de $Na_2S$.

Les résultats sont reportés dans le tableau 2.

Exemple 10 et 11

On procède comme dans l'exemple 8 mais à partir d'un acide à 67 ppm de $Mo/P_2O_5$ obtenu à partir d'un minerai de Jordanie également purifié par extraction au TBP et traité par $Na_2S$ à différentes concentrations en $P_2O_5$.

Les résultats sont reportés dans le tableau 2.

Exemples 12 et 13

On part d'un acide à 19 ppm de $Mo/P_2O_5$ obtenu à partir d'un minerai de Caroline du Nord calciné et purifié par extraction au TBP. On procède de la même manière que dans l'exemple 8 en faisant varier la concentration en acide pour le traitement par $Na_2S$ ainsi que la quantité de liqueur de $Na_2S$ utilisée.

Les résultats sont indiqués dans le tableau 2.

Exemple 14

Afin de bien montrer l'influence du molybdène sur le test des métaux lourds, on effectue ce test sur un acide de voie thermique contenant moins de 1 ppm d'arsenic et présentant une concentration en $P_2O_5$ de 62% et qui a été dopé en molybdène a des teneurs variables.

Les résultats sont indiqués dans le tableau 2.

Exemples 15 a 17

On part d'acides à 78 ppm $Mo/P_2O_5$ obtenus à partir d'un minerai de Youssoufia calciné et purifiés par extraction au tributylphosphate. On les traite comme précédemment par une solution de $Na_2S$ en goutte dans un erlenmeyer.

Exemple 18

Cet exemple est conforme à l'invention et est à comparer aux exemples 15 à 17 précédents. On utilise le même acide mais en le traitant avec la solution de $Na_2S$ à contre-courant dans une colonne de section 2 cm², remplie de billes de verre sur une hauteur de 60 cm (volume libre: 65 ml). Le débit de l'acide est de 140 ml/h; celui de la solution de $Na_2S$ à 20 g/l de 14 ml/h, ce qui correspond à 1,9 g $Na_2S/l$ d'acide.

Les résultats sont indiqués dans le tableau 3 et on constate l'intérêt qu'il y a à travailler à contre-courant car on arrive à une meilleure pureté avec une consommation de $Na_2S$ très inférieure.

Lex exemples ci-dessous ont pour but de montrer que le traitement permet aussi d'abaisser d'une manière significative la teneur de l'acide phosphorique en d'autres métaux lourds comme le cuivre et le plomb.

Exemple 19

On utilise un acide obtenu à partir d'un minerai de Caroline du Nord calciné, purifié par un procédé d'extraction au TBP et qui titre 29,6% $P_2O_5$ et en ppm/$P_2O_5$: 0,24 Cu; Pb<1.

On le recharge par du nitrate de plomb pour avoir 2 ppm Pb/$P_2O_5$. On traite cet acide par une solution à 150 g/l de $Na_2S$ distribuée en goutte à goutte en 1/2 heure à raison de 2 g $Na_2S$/l d'acide, puis on filtre sur creuset filtrant de porosité No. 4.

Les analyses donnent alors: 29% $P_2O_5$ et en ppm/$P_2O_5$: 0,18 Cu; 1,0 Pb.

Exemple 20

On utilise un acide obtenu à partir d'un minerai de Floride à 27% ppm/$P_2O_5$ et titrant en ppm/$P_2O_5$: 0,23 Cu; Pb<1. On le recharge par du nitrate de plomb et du nitrate de cuivre pour avoir 1,1 ppm Pb/$P_2O_5$ et 0,70 ppm Cu/$P_2O_5$.

On effectue le même traitement que dans l'exemple 19 et l'analyse de l'acide filtré indique: 26,3% $P_2O_5$ et en ppm/$P_2O_5$: 0,15 Cu; 0,70 Pb.

Bien entendu, l'invention n'est nullement limitée aux modes de réalisation décrits qui n'ont été donnés qu'à titre d'exemples.

TABLEAU 1

| Exemple | Concentration % $P_2O_5$ | Teneur en Mo ppm/$P_2O_5$ | Teneur en As ppm/$P_2O_5$. |
|---|---|---|---|
| 1 | 25,2 | 3,7 | <0,2 |
| 2 | 37,2 | 7,6 | |
| 3 | 48,1 | 10,4 | |
| 4 | 58 | 11,6 | <0,2 |
| 5 | 25,5 | 6,5 | <0,2 |
| 6 | 31,8 | 13,2 | <0,2 |
| 7 | 56,3 | 27,4 | <0,2 |

TABLEAU 2

| Exemple | Concentration % $P_2O_5$ de l'acide traite par $Na_2S$ | Quantite de $Na_2S$ utilisee (g/litre d'acide) | Teneur en Mo ppm/$P_2O_5$ | Test des metaux lourds exprime en Pb sur acides a 61% en $P_2O_5$ |
|---|---|---|---|---|
| 8 | 25,5 | 2 | 3,7 | 3 |
| 9 | 61 | a) 2<br>b) 10 | 12<br>12 | >10<br>>10 |
| 10 | 29,5 | 2 | 10 | environ 10 |
| 11 | 25,5 | 2 | 6,5 | environ 8 |
| 12 | 29 | 2 | 4 | compris entre 3 et 10 |
| 13 | 61 | a) 2<br>b) 22 | 19<br>18,5 | >10<br>>10 |
| 14 | 62 | | 0,3<br>4<br>9<br>13 | <3<br>compris entre 3 et 10<br>environ 10<br>>10 |

TABLEAU 3

| Exemple | Concentration en % $P_2O_5$ l'acide traite | Quantite de $Na_2S$ utilisee (g/l d'acide) | Teneur en Mo ppm/$P_2O_5$ |
|---|---|---|---|
| 15 | 26,2 | 6 | 29 |
| 16 | 26,2 | 10 | 17 |
| 17 | 22 | 20 | 11,5 |
| 18 | 26,5 | 1,9 | 7 |

**Revendications**

1. Procédé de purification d'un acide phosphorique de voie humide en vue de réduire sa teneur en molybdène à une valeur inférieure à 10 ppm par rapport à $P_2O_5$, du type consistant à traiter l'acide par un sulfure, caractérisé en ce qu'on traite l'acide à une concentration ne dépassant pas 40% en $P_2O_5$ et d'autant plus faible que la teneur en molybdène de l'acide avant traitement est élevée et en ce que le traitement est réalisé par mise en contact à contre-courant de l'acide et d'une solution de sulfure.

2. Procédé selon la revendication 1 caractérisé en ce que l'on effectue ledit traitement sur un acide ayant subi un prétraitement par extraction par un solvant organique et réextraction.

3. Procédé selon la revendication 2 caractérisé en ce que le solvant organique précité est le tributylphosphate.

**Patentansprüche**

1. Verfahren zur Reinigung einer Phosphorsäure nach den Naßverfahren im Hinblick auf eine Verminderung ihres Molybdängehalts auf einem Wert unter 10 ppm, bezogen auf $P_2O_5$, des Typs, der aus einer Behandlung der Säure mit einem Sulfid besteht, dadurch gekennzeichnet, daß man die Säure bei einer Konzentration behandelt, die 40% $P_2O_5$ nicht übersteigt und umso schwächer ist, je höher der Molybdängehalt der Säure vor der Behandlung ist, und dadurch, daß die Behandlung durchgeführt wird, indem man im Gegenstrom Säure und eine Sulfidlösung in Kontakt bringt.

2. Verfahren nach Anspruch 1, dadurch gekennzeichnet, daß man die genannte Behandlung mit einer Säure durchführt, die einer Vorbehandlung durch Extraktion mit einem organischen Lösungsmittel und Reextraktion unterworfen wurde.

3. Verfahren nach Anspruch 2, dadurch gekennzeichnet, daß das genannte organische Lösungmittel das Tributylphosphat ist.

**Claims**

1. A process for purifying a wet-process phosphoric acid for reducing the molybdenum content thereof to a value of less than 10 ppm with respect to $P_2O_5$, of the type consisting of treating the acid with a sulphide, characterised by treating the acid at a concentration which does not exceed 40% of $P_2O_5$ and which decreases in proportion to an increasing molybdenum content in the acid before treatment, and in that the treatment is carried out by bringing the acid and a sulphide solution into contact in a counter-flow mode.

2. A process according to claim 1 characterised by carrying out said treatment on an acid which has been subjected to a pre-treatment by extraction by means of an organic solvent and reextraction.

3. A process according to claim 2 characterised in that said organic solvent is tributyl phosphate.

6